# EUROPÄISCHE PATENTSCHRIFT

(11) **EP 0 528 060 B1**
(45) Veröffentlichungstag und Bekanntmachung des Hinweises auf die Patenterteilung: **19.02.1997**
(21) Anmeldenummer: 91113605.9
(22) Anmeldetag: 13.08.1991
(51) Int. Cl.: G06F 3/06, G06F 13/12

(54) **Verfahren zur Durchführung von Ein-/Ausgabeoperationen in Datenverarbeitungssystemen**
Procedure for input/output operations in computer systems
Procédé d'exécution d'operations d'entrée/sortie dans des systèmes de traitement de données

(43) Veröffentlichungstag der Anmeldung: 24.02.1993
(73) Patentinhaber: Siemens Nixdorf Informationssysteme Aktiengesellschaft, 33102 Paderborn (DE)
(72) Erfinder: Bräu, Josef, Dipl.-Ing.(FH), W-8000 München 90 (DE); Herrmann, Dieter, Dr.rer.nat., W-8000 München 50 (DE); Kunz, Siegfried, Dipl.-Ing., W-8011 Hohenlinden (DE); Salzmann, Herbert, W-8900 Augsberg (DE)
(74) Vertreter: Fuchs, Franz-Josef, Dr.-Ing.

(56) Entgegenhaltungen:
- EP-A- 0 055 370
- IBM SYSTEMS JOURNAL. Bd. 28, Nr. 2, 1989, ARMONK, NEW YORK US Seiten 196 - 226; P.GROSSMAN: 'EVOLUTION OF THE DASD STORAGE CONTROL'

## Beschreibung

Die Erfindung betrifft ein Verfahren zur Durchführung von Ein-/Ausgabeoperationen in Datenverarbeitungssystemen, bei dem jeweils eine Ein-/Ausgabeoperation von einer Ein-/Ausgabeverarbeitungseinheit an ein peripheres, aus rotierenden Speichergeräten, insbesondere Plattenspeichern, bestehendes Ein-/Ausgabesystem gerichtet wird, gemäß dem Oberbegriff des Patentanspruchs 1.

In Datenverarbeitungssystemen wird bekanntermaßen eine Vielzahl von Ein-/Ausgabeoperationen ausgeführt, die an ein peripheres Ein-/Ausgabesystem gerichtet werden. Eine Ein-/Ausgabeoperation wird dabei jeweils von einer Verarbeitungseinheit initiiert und durch eine Ein-/Ausgabeverarbeitungseinheit an das Ein-/Ausgabesystem übergeben. Besteht das Ein-/Ausgabesystem aus rotierenden Speichergeräten, wie z.B. Plattenspeichern, muß ein durchgehender Datenpfad von einem Gerät zu einem mit der Ein-/Ausgabeverarbeitungseinheit gekoppelten Kanalsystem zu dem Zeitpunkt zur Verfügung stehen, an dem die Schreib-/Leseköpfe des Geräts sich über der angesteuerten Stelle auf dem Plattenspeicher befinden.

Für den Fall, daß zum kritischen Zeitpunkt kein Datenpfad zur Ausführung des ausgelösten Lese- oder Schreibauftrags bereitsteht, folgt eine Verlängerung des Ein-/Ausgabevorgangs um die für eine Umdrehung des Plattenspeichers notwendige Zeit. Bei der Vielzahl der Speichergeräte, die heute in Ein-/Ausgabesystemen anschließbar sind, kann dies zu einer Einschränkung der Verarbeitungsleistung des Datenverarbeitungssystems führen.

Zur Vermeidung derartiger Verzögerungen werden mehrere, parallel verlaufende Datenpfade bereitgestellt, von denen kanalseitige Datenpfade zwischen dem Kanalsystem und einem mit den Speichergeräten verbundenen Steuerungssystem sowie geräteseitige Datenpfade im Steuerungssystem angeordnet sind. Eine Übertragung der Daten muß nicht über denselben Pfad durchgeführt werden, auf dem die Ein-/Ausgabeoperation von der Ein-/ Ausgabeverarbeitungseinheit an ein Speichergerät übergeben wird. Nach der Übergabe des Ein-/Ausgabewunsches einschließlich der für die Durchführung der Operation erforderlichen Steuerparameter wird die ausgewählte Verbindung aufgelöst (Diskonnektion) und später für die Übertragung der Daten ein durchgängiger Datenpfad von dem angesteuerten Speichergerät zu dem aus mehreren Kanälen bestehenden Kanalsystem hergestellt (Rekonnektion). Der Wunsch nach Aufbau einer derartigen Rückverbindung wird vom Speichergerät signalisiert, wobei sich das Gerät einige Zeit vor dem für das Lesen oder Schreiben maßgebenden Zeitpunkt (Vorhalt) mit einem bestimmten Signal (Rotational Position Sensing) meldet.

In "Evolution of the DASD Storage Control" by C.P. Grossman, IBM System Journal, Vol. 28, No. 2, 1989, Seiten 196 bis 226, sind verschiedene Modelle peripherer Ein-/Ausgabesysteme mit Speichergeräten und deren Steuerungssysteme beschrieben. Dabei weisen die Geräte entweder zwei oder vier Geräteanschlußpfade zu gerätenahen Kontrolleinrichtungen auf, die zusammen mit kanalseitigen Steuereinrichtungen das Steuerungssystem bilden. Eine dynamische Rekonnektion ermöglicht die Fortsetzung der ausgelösten Ein-/Ausgabeoperation über jeden der zur Verfügung stehenden Datenpfade. Mit steigender Anzahl der möglichen Pfade erhöht sich die Wahrscheinlichkeit, eine durchgängige Verbindung vom Gerät zum Kanalsystem aufzubauen, damit die Datenübertragung zum erwünschten Zeitpunkt erfolgen kann - siehe insbesondere Seiten 205 und 206 der oben genannten Literaturstelle.

Zur Herstellung der Rückverbindung werden Unterbrechungssignale (Interrupts), beginnend bei den Speichergeräten über die gerätenahen Kontrolleinrichtungen und kanalseitigen Steuereinrichtungen des Steuerungssystems bis zu den Kanälen des Kanalsystems, gleichzeitig auf den parallel verlaufenden Datenpfaden erzeugt. Sobald ein kompletter Datenpfad für die Übertragung der Daten zur Verfügung steht, werden die übrigen, teilweise aufgebauten Verbindungen wieder aufgelöst. Dieses Prinzip der dynamischen Rekonnektion hat in allen Stufen des Verbindungsaufbaus Redundanz zur Folge und bedingt auch einen längeren Vorhalt der einzelnen Speichergeräte.

Die Vielzahl der auf allen Kanälen parallel konkurrierenden Unterbrechungssignale führt zu einer erheblichen Blindleistung, da nur ein Kanal den Zuschlag für die Herstellung der Rückverbindung erhält. Dies kann sich insbesondere bei Betrieb der Kanäle im Multiplexverfahren, bei dem mehrere Operationen gleichzeitig ablaufen, nachteilig auf die Verarbeitungsleistung auswirken.

Der vorliegenden Erfindung liegt die Aufgabe zugrunde, ein Verfahren der eingangs genannten Art zu schaffen, bei dem die Zeit für die Durchführung von Ein-/Ausgabeoperationen mit rotierenden Speichergeräten im Mittel verkürzt wird.

Diese Aufgabe wird durch die kennzeichnenden Merkmale des Patentanspruches 1 gelöst.

Für die Herstellung der Rückverbindung werden vom Steuerungssystem aus den parallel verlaufenden Datenpfaden einzelne geräteseitige Pfade sowie ein einziger kanalseitiger Pfad festgelegt. Steuer- und Auswahlinformationen geben dabei die Alternativen der verschiedenen möglichen Pfade an. Durch die Auswahl bestimmter Pfade läßt sich die Bereitstellung der Unterbrechungssignale auf allen Pfaden vermeiden.

Dabei wirkt sich die Auswahl lediglich eines Pfades an der Schnittstelle zu den Kanälen des Kanalsystems besonders vorteilhaft auf die Verarbeitungsleistung aus, da immer nur ein Kanal mit dem Wunsch zur Herstellung der Rückverbindung belegt ist. Für den Fall, daß kurzfristige Engpässe bei der Herstellung der Rückverbindung im Kanalsystem auftreten, werden im Steuerungssystem Mittel zur Zwischenspeicherung der vom Speichergerät zu übernehmenden oder an das Speichergerät abzugebenden Daten bereitgestellt.

Auf diese Weise kann zum kritischen Zeitpunkt der Datentransfer vom bzw. zum Gerät erfolgen, selbst wenn kein durchgängiger Datenpfad für die Herstellung der Rückverbindung zur Verfügung steht. Die aus der zusätzlichen Umdrehung des Plattenspeichers resultierende Verzögerung des Ein-/Ausgabevorgangs wird vermieden, was zu einer Optimierung der mittleren Zeit für die Durchführung aller Ein-/Ausgabeoperationen mit rotierenden Speichergeräten führt.

Gemäß den Weiterbildungen der Erfindung kennzeichnen die Steuerinformationen die für die Rekonnektion jeweils auswählbaren kanalseitigen Datenpfade, während die Auswahlinformationen die für die Herstellung der Rückverbindung jeweils vorgesehenen geräteseitigen Datenpfade im Steuerungssystem angeben. Damit kann das Ein-/Ausschalten einer dynamischen Rückverbindung in jeder Stufe des Verbindungsaufbaus durch diese Informationen in einfacher Weise gesteuert werden. Die Steuer- und Auswahlinformationen werden dabei von Befehlen abgeleitet, durch die Pfadgruppen mit verschiedenen möglichen kanalseitigen Datenpfaden für die Herstellung der Rückverbindung vorgegeben werden können.

Bei einem Steuerungssystem mit gerätenahen Kontrolleinrichtungen für die Steuerung des Ein-/Ausgabesystems werden die Auswahlinformationen von Bitmasken gebildet, die individuell für jedes angeschlossene Speichergerät die Auswahl der einzelnen geräteseitigen Datenpfade im Steuerungsystem festlegen. Die Verwendung eines gemeinsamen, von allen Kontrolleinrichtungen lesbaren Steuerspeichers zur Speicherung der Auswahlinformationen ermöglicht die Auswahl der Pfade für die Rekonnektion unmittellbar an der Schnittstelle zu den Speichergeräten. Die Mittel zur Zwischenspeicherung der Daten bei einer Datenübertragung von oder zum Speichergerät werden in jeder Kontrolleinrichtung zur Verfügung gestellt.

Bei direkter Kopplung der gerätenahen Kontrolleinrichtungen mit dem Kanalsystem über die kanalseitigen Datenpfade werden die Steuerinformationen in einer für die Aufnahme von Verwaltungseinträgen der einzelnen Speichergeräte vorgesehenen Speichereinrichtung abgelegt.

Bei einem Steuerungssystem mit kanalseitigen Steuereinrichtungen für die Steuerung der kanalseitigen Datenpfade von und zu den zugehörigen Kanälen des Kanalsystems werden gemäß einer Weiterbildung der Erfindung die Steuerinformationen in einem allen Steuereinrichtungen gemeinsamen Kommunikationsspeicher hinterlegt. Anhand der gespeicherten Steuerinformationen werden eine freie Steuereinrichtung festgelegt und der eine, für die Rekonnektion vorgesehene kanalseitige Datenpfad ausgewählt. Für den Fall, daß das Steuerungssystem nur aus kanalseitigen Steuereinrichtungen aufgebaut ist, werden die Mittel zur Zwischenspeicherung der vom Speichergerät abzunehmenden oder an das Gerät zu übergebenden Daten in allen Steuereinrichtungen bereitgestellt.

Die Erfindung wird anhand eines in der Zeichnung dargestellten Ausführungsbeispiels näher erläutert. Im einzelnen zeigen
- FIG 1: das Blockschaltbild eines Datenverarbeitungssystems zur Durchführung von Ein-/Ausgabeoperationen mit rotierenden Speichergeräten,
- FIG 2 bis FIG 5: die Blockschaltbilder verschiedener Ausführungsformen eines Steuerungssystems zur Steuerung der angeschlossenen Speichergeräte,
- FIG 6: das Blockschaltbild zweier gerätenaher Kontrolleinrichtungen für die Steuerung der Speichergeräte eines Ein-/ Ausgabesystems,
- FIG 7: die in einem gemeinsamen Steuerspeicher der Kontrolleinrichtungen gemäß FIG 6 enthaltenen Auswahlinformationen,
- FIG 8: das Blockschaltbild zweier kanalseitiger Steuereinrichtungen für die Steuerung der Datenpfade vom und zum Kanalsystem und
- FIG 9: die in einem den Steuereinrichtungen gemäß FIG 8 gemeinsamen Kommunikationsspeicher enthaltenen Steuerinformationen.

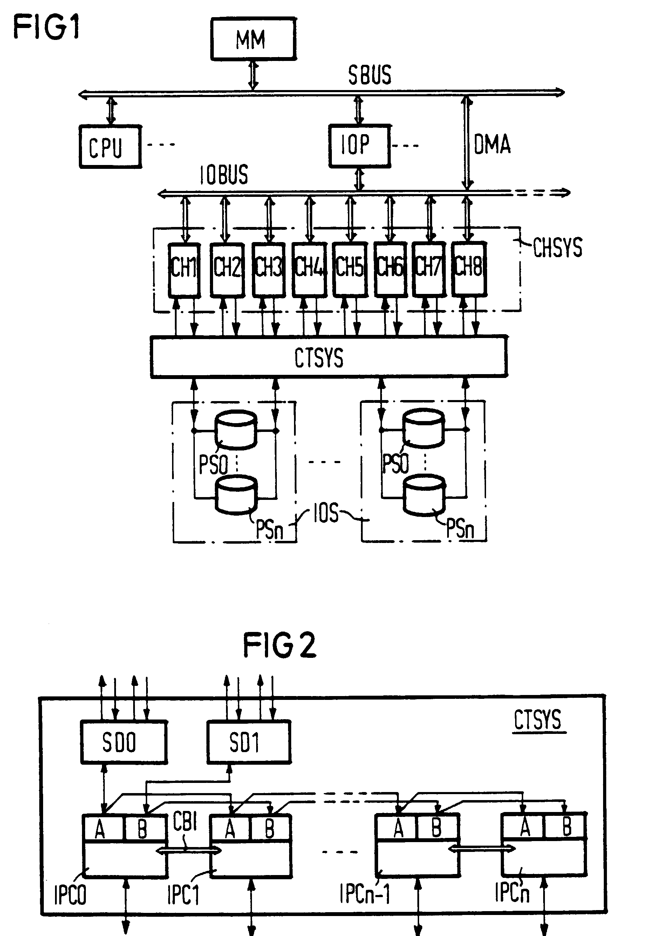

Im Blockschaltbild gemäß FIG 1 ist ein Datenverarbeitungsystem dargestellt, bei dem auf periphere Ein-/Ausgabesysteme IOS zugegriffen werden kann. Jedes Ein-/Ausgabesystem IOS besteht aus einer Vielzahl von rotierenden Speichergeräten, beispielsweise Plattenspeichern PSO...PSn mit jeweils zwei Geräteanschlußpfaden. Das Datenverarbeitungssystem weist bekanntermassen einen Hauptspeicher MM, eine oder mehrere Verarbeitungseinheiten CPU sowie mindestens eine Ein-/Ausgabeverarbeitungseinheit IOP auf. Alle Einheiten kommunizieren miteinander über ein gemeinsames Leitungssystem SBUS, wobei die Ein-/Ausgabeverarbeitungseinheit(en) IOP zur Durchführung von Ein-/Ausgabeoperationen zusätzlich an ein Ein-/Ausgabeleitungssystem IOBUS angeschlossen ist (sind).

Mit dem Ein-/Ausgabeleitungssystem IOBUS ist außerdem ein Kanalsystem CHSYS gekoppelt. Dieses im Ausführungsbeispiel auf acht Kanäle CH1...CH8 begrenzte Kanalsystem CHSYS ist über parallel verlaufende, kanalseitige Datenpfade mit einem nachgeschalteten Steuerungssystem CTSYS verbunden. Das System CTSYS bildet die Schnittstelle zu den peripheren Ein-/Ausgabesystemen IOS und dient somit als steuerndes Bindeglied zwischen dem mit der Ein-/Ausgabeverarbeitungseinheit IOP gekoppelten Kanalsystem CHSYS und den passiven Speichergeräten. Insbesondere obliegt dem Steuerungssystem CTSYS die Kontrolle und Steuerung des Ablaufs von Ein-/Ausgabeoperationen sowie die Herstellung einer Rückverbindung zwischen einem der Plattenspeicher PSO... PSn und einem der Kanäle. Die an den Plattenspeicher abzugebenden bzw. vom Plattenspeicher zu übernehmenden Daten werden über einen mit den Kanälen CH1...CH8 gekoppelten Direktzugriffspfad DMA an der Ein-/Ausgabeverarbeitungseinheit IOP vorbei übertragen.

Zur Herstellung der Rückverbindung können vom Steuerungssystem CTSYS aus mehreren parallel verlaufenden, geräte- und kanalseitigen Datenpfaden einzelne Datenpfade ausgewählt werden. Die Entscheidungsalternativen in Form von Steuer- und Auswahlinformationen für die individuelle Freigabe der Pfade werden in Speichereinrichtungen des Steuerungssystems CTSYS hinterlegt. Während einer Startphase des Datenverarbeitungssystems werden Befehle bereitgestellt, durch die jeweils Pfadgruppen mit verschiedenen, für die Herstellung der Rückverbindung jeweils geeigneten, kanalseitigen Datenpfaden gebildet und gegebenenfalls wieder aufgelöst werden. Diese als Pfadgruppenbefehle bezeichneten Anweisungen enthalten dazu die Steuerinformationen, aus denen die Auswahlinformationen abgeleitet und anschließend gespeichert werden.

Eine von einer Verarbeitungseinheit CPU ausgelöste Ein-/Ausgabeoperation, beispielsweise ein Lese- oder Schreibauftrag an einen ausgewählten Plattenspeicher eines Ein-/Ausgabesystems IOS, wird realzeitentkoppelt in zwei Phasen ausgeführt. In der ersten Phase erfolgt die Übergabe operations- und gerätespezifischer Parameter, beispielsweise Geräteadresse, Parameter für die Positionierung der Lese-/Schreibköpfe des ausgewählten Geräts, Adressen für die Speicherblöcke, Blocklängen usw., an das Steuerungssystem CTSYS bzw. Ein-/Ausgabesystem IOS. Die Übertragung dieser Daten zum adressierten Plattenspeicher erfolgt über einen freien kanalseitigen Datenpfad im Kanalsystem CHSYS und einen festgelegten geräteseitigen Datenpfad im Steuerungssystem CTSYS. Danach wird die aufgebaute Verbindung aufgelöst (Diskonnektion).

Die zweite Phase wird vom Plattenspeicher selbst iniitiert, indem dieser sich über seine beiden Geräteanschlußpfade mit einem Unterbrechungssignal (Rotational Position Sensing) beim Steuerungssystem CTSYS meldet. Dieses Signal teilt rechtzeitig vor dem für das Lesen oder Schreiben maßgebenden Zeitpunkt die Bereitschaft des Speichergeräts zum Datentransfer mit. Für die Fortsetzung der Ein-/Ausgabeoperation ist daher eine durchgängige Rückverbindung (Rekonnektion) vom angesteuerten Gerät zum Kanalsystem CHSYS zur Verfügung zu stellen. Zur Herstellung der Rückverbindung werden vom Steuerungssystem

CTSYS aus den parallel verlaufenden Datenpfaden einzelne Pfade anhand der Steuer- und Auswahlinformationen festgelegt. Lediglich über diese festgelegten Datenpfade gelangt ein Unterbrechungssignal zum Kanalsystem CHSYS, wobei von den durch die Pfadgruppenbefehle vorgegebenen, für die dynamische Rekonnektion vorgesehenen kanalseitigen Datenpfaden nur ein Datenpfad mit dem zugehörigen Kanal für die Durchschaltung des Unterbrechungssignals an die Ein-/Ausgabeverarbeitungseinheit IOP ausgewählt wird. Die Selektion bestimmter geräteseitiger Datenpfade im Steuerungssystem CTSYS und insbesondere die Belegung lediglich eines kanalseitigen Datenpfads im Kanalsystem CHSYS für die Herstellung der Rückverbindung macht eine parallele Bereitstellung von Unterbrechungssignalen auf allen Datenpfaden überflüssig.

Für den Fall, daß zum kritischen Zeitpunkt, an dem die Lese-/Schreibköpfe des angesteuerten Plattenspeichers sich über der adressierten Stelle befinden, für die vom Speichergerät zu übernehmenden oder an das Speichergerät abzugebenden Daten keine Rückverbindung zur Verfügung steht, sind im Steuerungssystem CTSYS Mittel zur Zwischenspeicherung dieser Daten vorgesehen. Dadurch kann eine zusätzliche Umdrehung des Plattenspeichers wegen nicht rechtzeitiger Bedienung vermieden werden. Dies bewirkt im Mittel eine Verkürzung der Zeit für die Durchführung der Ein-/Ausgabeoperationen mit rotierenden Speichergeräten und somit eine Steigerung der Leistung des gesamten Datenverarbeitungssystems. Durch Bedienungsengpässe auftretende Verzögerungen, beispielsweise als Folge der Auswahl lediglich eines kanalseitigen Datenpfades im Kanalsystem CHSYS für die Herstellung der Rückverbindung, sind durch die Zwischenspeicherung vernachlässigbar.

FIG 2 bis FIG 4 zeigen verschiedene Ausführungsformen des in FIG 1 dargestellten Steuerungssystems CTSYS. Das Steuerungssystem CTSYS gemäß FIG 2 besteht aus zwei kanalseitigen Steuereinrichtungen SD0, SD1 und aus einer Vielzahl von gerätenahen Kontrolleinrichtungen IPC0...IPCn. Jede der Steuereinrichtungen SD0, SD1 ist beispielsweise an zwei Kanäle des Kanalsystems CHSYS über die zugehörigen kanalseitigen Datenpfade gemäß FIG 1 angeschlossen, wobei jeweils ein Kanal bei Ausfall des anderen Kanals den Verbindungsaufbau gewährleistet. Die steuernde Schnittstelle zu den jeweils aus den Plattenspeichern PSO...PSn bestehenden peripheren Ein-/Ausgabesystemen IOS gemäß FIG 1 bilden jeweils zwei Kontrolleinrichtungen, z.B. IPC0 und IPC1 oder IPCn-1 und IPCn, deren jeweiliger Ausgangspfad mit einem der beiden Geräteanschlußpfade jedes einzelnen Plattenspeichers verbunden ist.

Jede Kontrolleinrichtung weist zwei Ports A, B auf, von denen jeder Port mit einer der beiden Steuereinrichtungen SD0, SD1 über einen eigenen geräteseitigen Datenpfad gekoppelt ist. Dabei sind die Ports einer Kontrolleinrichtung, z.B. IPC0, unmittelbar an die Steuereinrichtungen SD0, SD1 angeschlossen, während die restlichen Kontrolleinrichtungen, z.B. IPC1... IPCn, über serielle Kettung (daisy chain) der jeweils einander entsprechenden Ports A, B mit den Steuereinrichtungen SD0, SD1 verknüpft sind.

Sobald eine Ein-/Ausgabeoperation ausgelöst ist, werden die zugehörigen Steuerparameter über einen von der Ein-/Ausgabeverarbeitungseinheit ausgewählten kanalseitigen Datenpfad an eine der beiden Steuereinrichtungen SD0, SD1 und über den zwischen der ausgewählten Einrichtung und den Kontrolleinrichtungen verlaufenden geräteseitigen Datenpfad zum Ein-/Ausgabesystem übergeben. Dabei werden zusätzlich zur Übermittlung der geräte- und operationsspezifischen Parameter Auswahlinformationen in Form von Bitmasken übertragen, anhand der die vier Ports zweier miteinander kommunizierender Kontrolleinrichtungen, z.B. IPC0 und IPC1, individuell für jeden Plattenspeicher des angesteuerten Ein-/Ausgabesystems für die Rekonnektion freigegeben werden können.

Das vom adressierten Plattenspeicher erzeugte Unterbrechungssignal (RPS) wird über seine beiden Geräteanschlußpfade an die angeschlossenen Kontrolleinrichtungen IPC0, IPC1 gesendet. Jede der beiden Kontrolleinrichtungen IPC0, IPC1 kann das bereitgestellte Signal übernehmen und durch die in einem den beiden Kontrolleinrichtungen IPC0, IPC1 gemeinsamen Steuerspeicher hinterlegten Bitmasken den Port für einen ausgewählten geräteseitigen Datenpfad zu einer der Steuereinrichtungen SD0, SD1 freigeben. Die Herstellung der Rückverbindung erfolgt in einem gemäß FIG 2 aufgebauten Steuerungssystem CTSYS mit derselben Steuereinrichtung und über denselben Kanal, über die bzw. den die Ein-/Ausgabeoperation initiiert wird.

Die Mittel zur Zwischenspeicherung der an den angesteuerten Plattenspeicher zu übergebenden bzw. von ihm zu übernehmenden Daten sind in jeder der Kontrolleinrichtung IPC0...IPCn vorgesehen. In vorteilhafter Weise können somit die Daten des echtzeitentkoppelten Datentransfers unmittelbar an der Schnittstelle der Speichergeräte übergeben werden, ohne daß eine durchgängige Rückverbindung zum kritischen Zeitpunkt hergestellt ist. Die Mittel zur Zwischenspeicherung bestehen beispielsweise aus einem FIFO-Speicher (First In First Out).

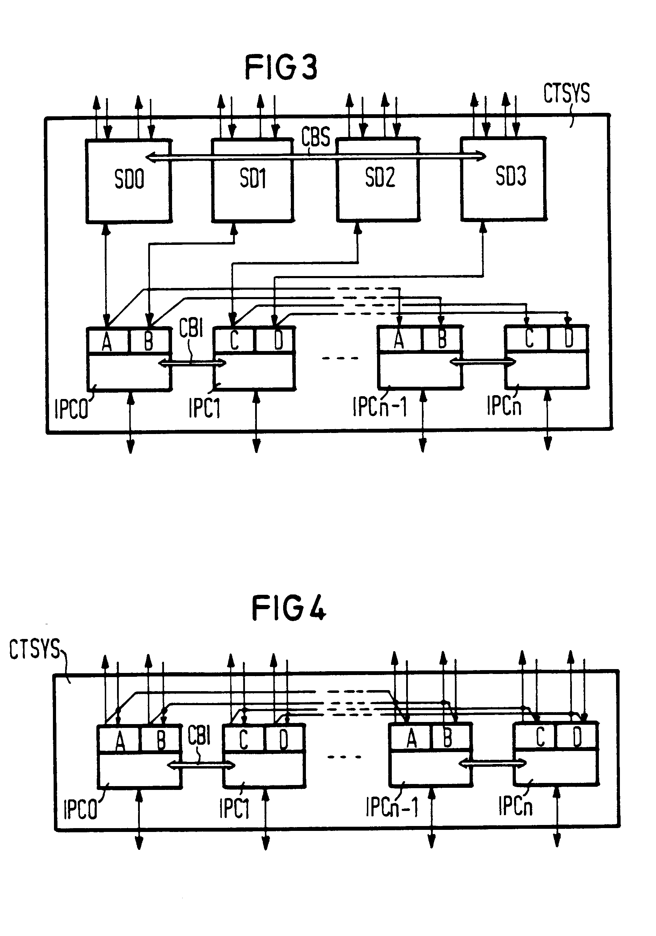

Im Gegensatz zu FIG 2 ist in FIG 3 ein Steuerungssystem CTSYS dargestellt, das vier Steuereinrichtungen SD0...SD3 mit den in beiden Übertragungsrichtungen verlaufenden kanalseitigen Datenpfaden der zugehörigen Kanäle CH1...CH8 des Kanalsystems CHSYS gemäß FIG 1 aufweist. Mit der Bereitstellung der Pfadgruppenbefehle werden die für die Herstellung der Rückverbindung jeweils auswählbaren kanalseitigen Datenpfade festgelegt. Die Steuerinformationen, die die verschiedenen möglichen Datenpfade angeben, sind in einem von allen Steuereinrichtungen SD0...SD3 über einen Kommunikationsbus CBS ansteuerbaren Kommunikationsspeicher hinterlegt. Jede der Steuereinrichtungen SD0...SD3 kann beispielsweise aus den gespeicherten Informationen die Bitmasken für die individuelle Freigabe der Ports A, B, C, D zweier durch einen weiteren Kommunikationsbus CBI miteinander gekoppelter Kontrolleinrichtungen, z.B. IPC0 und IPC1, bilden, an die jeweils die Plattenspeicher eines Ein-/Ausgabesystems angeschlossen sind.

Dadurch, daß die geräteseitigen Datenpfade von den Ports A...D der Kontrolleinrichtungen IPC0, IPC1 parallel zu allen vier Steuereinrichtungen SD0...SD3 verlaufen, kann es für jeden Plattenspeicher eines Ein-/Ausgabesystems mehrere Auswahlmöglichkeiten zur Rekonnektion geben. Die Kontrolleinrichtungen weiterer Ein-/Ausgabesysteme, z.B. IPCn und IPCn-1, sind dabei durch serielle Kettung (daisy chain) ihrer zugehörigen Ports mit den Steuereinrichtungen SD0...SD3 verbunden.

Welche der beiden Kontrolleinrichtungen, z.B. IPC0 und IPC1, die jeweils das Unterbrechungssignal (RPS) vom adressierten Plattenspeicher empfangen, beabsichtigt, den Datentransfer durchzuführen, wird auf Grund der im gemeinsamen Steuerspeicher abgelegten Bitmasken für die einzelnen Ports und abhängig von der momentanen Belegung der Kontrolleinrichtungen entschieden. Die ausgewählte Kontrolleinrichtung, z.B. IPC0, liefert an die erlaubten Portadressen das Unterbrechungssignal für die angeschlossenen Steuereinrichtungen, z.B. SD0 und SD1.

In gleicher Weise wird unter den mit dem Signal angesteuerten Steuereinrichtungen, z.B. SD0 und SD1, eine Entscheidung getroffen, welche Einrichtung den Wunsch nach Herstellung der Rückverbindung an einen der durch die Pfadgruppenbefehle auswälbaren Kanäle übergibt. Auf diese Weise muß eine ausgelöste und diskonnektierte Ein-/Ausgabeoperation nicht notwendigerweise über denselben Kanal fortgesetzt werden, über den sie initiiert wird. Die Auswahl lediglich eines kanalseitigen Datenpfades für die Herstellung der Rückverbindung und damit für die Datenübertragung macht die Durchführung von Ein-/Ausgabeoperationen mit rotierenden Speichergeräten wesentlich effizienter gegenüber bekannten Systemen mit paralleler Belegung aller Datenpfade.

FIG 4 zeigt ein Steuerungssystem CTSYS, bei dem die gerätenahen Kontrolleinrichtungen IPC0...IPCn direkt an die Kanäle des Kanalsystems angeschlossen sind. Die Umsetzung der Pfadgruppenbefehle in Bitmasken für die Ports A...D der einzelnen Kontrolleinrichtungen wird vom Kanal selbst durchgeführt. Die Speicherung der geräte- und operationsspezifischen Parameter und der befehlsabhängigen Steuerinformationen, aus denen die Masken abgeleitet werden, erfolgt beispielsweise in einem gesonderten Speicherbereich (Subchannel) des Hauptspeichers, der Verwaltungseinträgen für die einzelnen Speichergeräte vorbehalten ist. Die Auswahl der geräteseitigen Datenpfade sowie die Festlegung des einen kanalseitigen Datenpfades für die Herstellung der Rückverbindung erfolgt in gleicher Weise wie bei den Steuerungssystemen CTSYS gemäß FIG 2 und FIG 3.

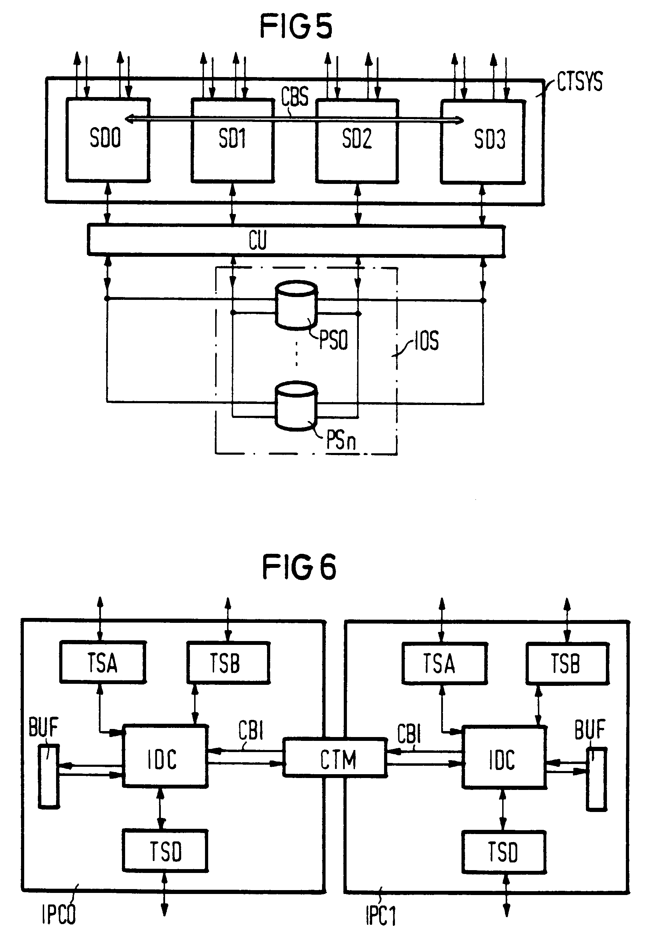

Das Steuerungssystem CTSYS in FIG 5 besteht nur aus kanalseitigen Steuereinrichtungen SD0...SD3, die mit einer zwischengeschalteten Steuereinheit CU zur Ansteuerung der Plattenspeicher PS0...PSn eines Ein-/Ausgabesystems IOS verbunden ist. Jeder Plattenspeicher, z.B. PS0, weist im Gegensatz zu den Plattenspeichern gemäß FIG 1 vier Geräteanschlußpfade auf, über die das Unterbrechungssignal (RPS) parallel zur Steuereinheit CU gesendet und von dort zu den angeschlossenen Steuereinrichtungen SD0...SD3 weitergeleitet wird.

Die Festlegung des einen kanalseitigen Datenpfades mit dem zugehörigen Kanal erfolgt wiederum anhand der durch die Pfadgruppenbefehle vorgegebenen Steuerinformationen, die in dem allen Steuereinrichtungen SD0...SD3 gemeinsamen Kommunikationsspeicher gespeichert sind. Die Steuereinheit CU dient lediglich zur Umsetzung der zur ausgelösten Ein-/Ausgabeoperation gehörigen Steuerparameter in Ansteuersignale für die einzelnen Plattenspeicher PS0...PSn. Die Speicherung von Auswahlinformationen sowie von Daten, die vom angesteuerten Plattenspeicher zu übernehmen oder an ihn zu übergeben sind, in den gerätenahen Kontrolleinrichtungen der Steuerungssysteme gemäß den FIG 2, 3 und 4 findet nicht statt.

Die vom Plattenspeicher zu übernehmenden oder an ihn zu übergebenden Daten können jeweils in den Steuereinrichtungen SD0 ...SD3 zwischengespeichert werden. Das in FIG 5 dargestellte System ist auch für Plattenspeicher mit nur zwei Geräteanschlußpfaden realisierbar, so daß für die Entgegennahme des Unterbrechungsssignals (RPS) in diesem Fall zwei Steuereinrichtungen, z.B. SD0 und SD1, genügen.

FIG 6 zeigt den Aufbau zweier miteinander kommunizierender Kontrolleinrichtungen IPC0 und IPC1, die die gerätenahe Steuerung der angeschlossenen Plattenspeicher eines Ein-/Ausgabesystems übernehmen. In jeder Kontrolleinrichtung sind Treiberschaltungen TSA, TSB an der Schnittstelle zu beispielsweise den kanalseitigen Steuereinrichtungen sowie eine Treiberschaltung TSD zur Versorgung eines der beiden Geräteanschlußpfade eines Plattenspeichers angeordnet. In je einem Datenspeicher BUF werden die vom Plattenspeicher zu übernehmenden oder an ihn zu übergebenden Daten gespeichert.

Die Kommunikationsschnittstelle zwischen beiden Kontrolleinrichtungen IPC0, IPC1 bildet der über den Kommunikationsbus CBI ansteuerbare gemeinsame Steuerspeicher CTM, in dem unter anderem die Auswahlinformationen in Form von Bitmasken für die individuelle Freigabe der Ports enthalten sind. Dieser Steuerspeicher CTM ist von jeder in einer Kontrolleinrichtung jeweils angeordneten zentralen Steuereinheit IDC les- und beschreibbar. Die zentrale Steuereinheit IDC wiest einen Prozessor auf, der den gesamten Datenfluß in der Kontrolleinrichtung sowie von und zu den angeschlossenen Einheiten steuert.

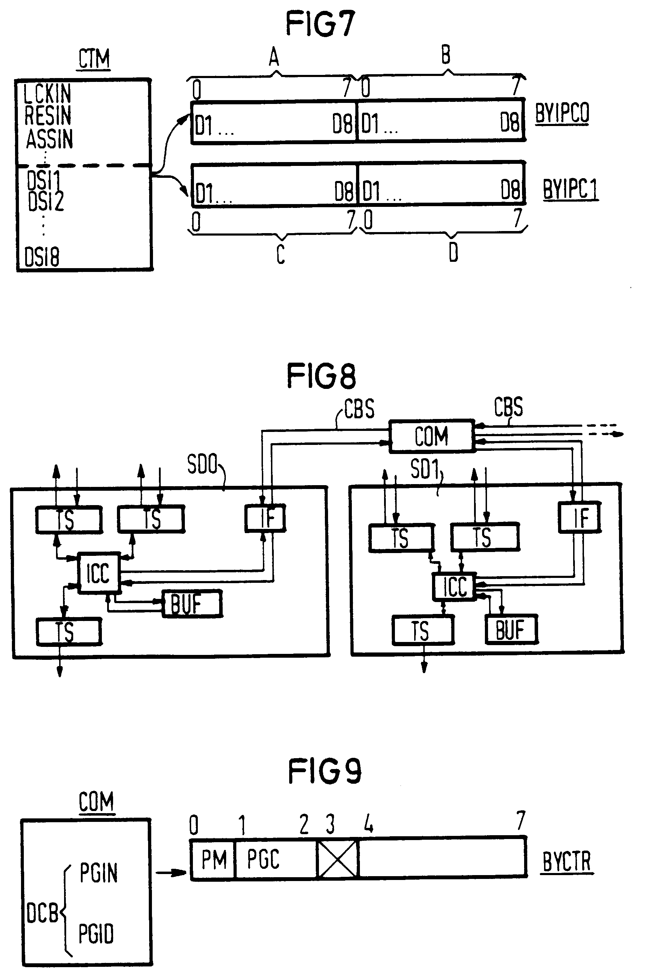

In FIG 7 ist ein Ausschnitt des gemeinsamen Steuerspeichers CTM dargestellt. Darin sind unter anderem die Auswahlinformationen DSI1...DSI8 eingetragen. Im gewählten Ausführungsbeispiel können in einem Ein-/Ausgabesystem bis maximal acht Geräte angeschlossen werden. Für jedes der speichergeräte wird ein Bereich im Steuerspeicher CTM vorgegebener Größe reserviert, in dem diese gerätespezifischen Informationen, z.B. DSI1, gespeichert werden.

Neben der zur Herstellung der Rückverbindung vorgesehenen Auswahlinformationen DSI1...DSI8 enthält der Steuerspeicher CTM weitere Informationen, die jeweils für eine Ein-/Ausgabeoperation und ein Speichergerät festgelegt werden. So können beispielsweise die Informationen LCKIN für jedes Gerät bewirken, daß die jeweils zugehörigen gerätespezifischen Informationen für Zugriffe gesperrt bleiben. Mit den ebenfalls im Steuerspeicher CTM hinterlegten Informationen RESIN und ASSIN ist es möglich, ein bestimmtes Gerät für die Datenübertragung explizit und implizit zu reservieren, so daß eine dynamische Zuteilung des Geräts für die Durchführung von Ein-/Ausgabeoperationen nicht erfolgen kann. Demgegenüber erlauben die Informationen DSI1...DSI8 die Auswahl einzelner Ports in den gerätenahen Kontrolleinrichtungen für den Datentransfer von und zu den Speichergeräten.

Die Auswahlinformationen DSI1...DSI8 werden von Bitmasken gebildet, die für jedes der an die beiden Kontrolleinrichtungen angeschlossenen Speichergeräte D1...D8 die Freigabe der zugehörigen Ports A, B bzw. A...D individuell festlegen und damit die Auswahl der geräteseitigen Datenpfade für die Rekonnektion ermöglichen. Der Eintrag im Speicher CTM besteht aus zwei Bytes BYIPC0, BYIPC1 für jede der beiden Kontrolleinrichtungen. Jede Maske weist dabei vier Bitstellen auf, die sich jeweils aus den einander entsprechenden Bitstellen D1...D8 für die vier Ports, z.B. A...D, zusammensetzt.

Der Aufbau der kanalseitigen Steuereinrichtungen entspricht im wesentlichen dem der gerätenahen Kontrolleinrichtungen. So sind gemäß FIG 8 in jeder der Steuereinrichtungen SD0, SD1 ebenfalls Treiberschaltungen TS an den Schnittstellen zu den Kanälen sowie zu den Kontrolleinrichtungen angeordnet. Eine Steuereinheit ICC steuert den Datenfluß und den Zugriff auf die Speicher BUF und COM. Dabei ist der von allen Steuereinrichtungen gemeinsam ansteuerbare Kommunikationsspeicher COM nur in Steuerungssystemen CTSYS gemäß FIG 3 oder FIG 5 angeordnet.

Die im Kommunikationsspeicher COM von allen Steuereinrichtungen lesbaren Informationen enthalten einen Speicherblock DCB, in dem Steuerinformationen PGIN und PGID für jeden angeschlossenen Plattenspeicher eingetragen sind. Dabei weisen die Steuerinformationen PGID Identifikationszeichen für jeden der möglichen kanalseitigen Datenpfade auf, die jeweils zu Pfadgruppen für die Herstellung der Rückverbindung zusammengefaßt werden. Die bestehenden Steuerinformationen PGIN umfassen jeweils Informationen über den Modus PM einer Pfadgruppe, der angibt, ob die Herstellung einer Rückverbindung nur über einen Pfad oder über verschiedene Pfade einer Gruppe von Pfaden möglich ist, sowie Informationen PGC, die die Bildung und Auflösung einer Pfadgruppe kennzeichnen.

## Patentansprüche

1. Verfahren zur Durchführung von Ein-/Ausgabeoperationen in Datenverarbeitungssystemen, bei dem jeweils eine Ein-/Ausgabeoperation von einer Ein-/Ausgabeverarbeitungseinheit (IOP) an ein peripheres, aus rotierenden Speichergeräten, insbesondere Plattenspeichern (PSO...PSn), bestehendes Ein-/Ausgabesystem (IOS) gerichtet und mit einer Übertragung von Daten zu oder von einem angesteuerten Speichergerät fortgesetzt wird, sobald eine Rückverbindung zwischen einem der mit einem Steuerungssystem (CTSYS) verbundenen Speichergeräte und einem aus mehreren Kanälen (z.B. CH1...CH8) bestehenden und mit der Ein-/Ausgabeverarbeitungseinheit (IOP) gekoppelten Kanalsystem (CHSYS) über parallel verlaufende, im Steuerungs- bzw. im Kanalsystem (CTSYS bzw. CHSYS) vorgesehene geräteseitige bzw. kanalseitige Datenpfade hergestellt ist (dynamische Rekonnektion), **da**
**durch gekennzeichnet,**
- daß für die Herstellung der Rückverbindung vom Steuerungssystem (CTSYS) aus den jeweils parallel verlaufenden Datenpfaden einzelne Pfade anhand von Steuer- und Auswahlinformationen (PGIN, PGID und DSI1..DSI8) festgelegt werden, wobei von den kanalseitigen Datenpfaden jeweils nur ein Pfad zur Rekonnektion über den zugehörigen Kanal des Kanalsystems (CHSYS) ausgewählt und mit einer Anforderung zur Herstellung der Rückverbindung belegt wird, und
- daß im Steuerungssystem (CTSYS) Mittel (BUF) zur Zwischenspeicherung der vom Speichergerät zu übernehmenden oder an das Speichergerät zu übergebenden Daten bereitgestellt werden.

2. Verfahren nach Anspruch 1, **dadurch gekennzeichnet,** daß die Steuerinformationen (PGIN, PGID) die für die Herstellung der Rückverbindung jeweils auswählbaren kanalseitigen Datenpfade kennzeichnen.

3. Verfahren nach Anspruch 2, **dadurch gekennzeichnet,** daß die Steuerinformationen (PGIN, PGID) von Befehlen abgeleitet werden, durch die Pfadgruppen mit verschiedenen möglichen kanalseitigen Datenpfaden für die Herstellung der Rückverbindung jeweils vorgegeben werden.

4. Verfahren nach Anspruch 1, **dadurch gekennzeichnet,** daß die Auswahlinformationen (DSI1...DSI8) die für die Herstellung der Rückverbindung jeweils auswählbaren geräteseitigen Datenpfade im Steuerungssystem (CTSYS) angeben.

5. Verfahren nach den Ansprüchen 3 und 4, **dadurch gekennzeichnet,** daß die Auswahlinformationen (DSI1...DSI8) von den Befehlen für die Festlegung der Pfadgruppen abgeleitet werden.

6. Verfahren nach einem der Ansprüche 2 bis 5, **dadurch gekennzeichnet,** daß bei einem Steuerungssystem (CTSYS) mit gerätenahen Kontrolleinrichtungen (z.B. IPC0,IPC1) für die Steuerung des Ein-/Ausgabesystems (IOS) die Auswahlinformationen (DSI1...DSI8) von Bitmasken (BYIPC0, BYIPC1), die individuell für jedes angeschlossene Speichergerät die Auswahl der einzelnen geräteseitigen Datenpfade im steuerungssystem festlegen, gebildet und in einen den Kontrolleinrichtungen gemeinsamen Steuerspeicher (CTM) eingetragen werden.

7. Verfahren nach Anspruch 6, **dadurch gekennzeichnet,** daß die Mittel (BUF) zur Zwischenspeicherung der Daten bei einer Datenübertragung vom oder zum Speichergerät in jeder Kontrolleinrichtung (z.B. IPC0...IPCn) zur Verfügung stehen.

8. Verfahren nach Anspruch 6 oder 7, **dadurch gekennzeichnet,** daß bei direkter Kopplung der gerätenahen Kontrolleinrichtungen (z.B. IPC0,IPC1) mit dem Kanalsystem (CHSYS) über die kanalseitigen Datenpfade die Steuerinformationen (PGIN, PGID) in einer zur Aufnahme von Verwaltungseinträgen für die einzelnen Speichergeräte vorgesehenen Speichereinrichtung abgelegt werden.

9. Verfahren nach einem der Ansprüche 2 bis 7, **dadurch gekennzeichnet,** daß bei einem Steuerungssystem (CTSYS) mit kanalseitigen Steuereinrichtungen (z.B. SD0...SD3) für die Steuerung der kanalseitigen Datenpfade von und zu den zugehörigen Kanälen (z.B. CH1...CH8) des Kanalsystems (CHSYS) die Steuerinformationen (PGIN,PGID) in einem allen Steuereinrichtungen gemeinsamen Kommunikationsspeicher (COM) gespeichert werden, und daß anhand der gespeicherten Steuerinformationen die Auswahl des einen für die Herstellung der Rückverbindung vorgesehenen kanalseitigen Daten pfads durch Festlegung einer freien Steuereinrichtung (z.B. SD0) erfolgt.

10. Verfahren nach einem derr Ansprüche 2 bis 5, **dadurch gekennzeichnet,** daß bei einem lediglich aus kanalseitigen Steuereinrichtungen (z.B. SD0...SD3) für die Steuerung der kanalseitigen Datenpfade von und zu den zugehörigen Kanälen (z.B. CH1...CH8) des Kanalsystems (CHSYS) bestehenden Steuerungssystem (CTSYS) die Steuerinformationen (PGIN, PGID) in einem allen Steuereinrichtungen gemeinsamen Kommunikationsspeicher (COM) gespeichert werden, daß anhand der gespeicherten Steuerinformationen die Auswahl des für die Herstellung der Rückverbindung vorgesehenen kanalseitigen Datenpfads durch Festlegung einer freien Steuereinrichtung (z.B. SD0) erfolgt, und daß die Mittel (BUF) zur Zwischenspeicherung der Daten einer Datenübertragung vom oder zum Speichergerät in allen Steuereinrichtungen (z.B. SD0...SD3) zur Verfügung stehen.

## Claims

1. Procedure for input/output operations in data processing systems, in which in each case an input/output operation is directed from an input/output processing unit (IOP) to a peripheral input/output system (IOS) comprising rotating storage devices, in particular disk storage devices (PSO...PSn), and is continued with a transfer of data to or from an activated storage device as soon as a return connection is established between one of the storage devices connected to a control system (CTSYS) and a channel system (CHSYS), comprising a plurality of channels (for example CH1...CH8) and coupled to the input/output processing unit (IOP), via parallel-running equipment-side and channel-side data paths provided in the control system (CTSYS) and in the channel system (CHSYS), respectively (dynamic reconnection),
characterized
- in that, for establishing the return connection, individual paths from the respectively parallel-running data paths are specified by the control system (CTSYS) on the basis of control and selection information (PGIN, PGID and DSI1...DSI8), only one path being selected in each case from the channel-side data paths for the reconnection via the associated channel of the channel system (CHSYS) and reserved with a request for establishing the return connection, and
- in that in the control system (CTSYS) means (BUF) for buffer storing the data to be taken over from the storage device or to be transferred to the storage device are made available.

2. Procedure according to Claim 1, characterized in that the control information (PGIN, PGID) identifies the channel-side data paths which are in each case selectable for establishing the return connection.

3. Procedure according to Claim 2, characterized in that the control information (PGIN, PGID) is derived from commands by which path groups with different possible channel-side data paths for establishing the return connection are in each case prescribed.

4. Procedure according to Claim 1, characterized in that the selection information (DSI1...DSI8) specifies the equipment-side data paths in the control system (CTSYS) which are in each case selectable for establishing the return connection.

5. Procedure according to Claims 3 and 4, characterized in that the selection information (DSI1...DSI8) is derived from the commands for specifying the path groups.

6. Procedure according to one of Claims 2 to 5, characterized in that, in the case of a control system (CTSYS) with equipment-related checking devices (for example IPC0, IPC1), for controlling the input/output system (ISO) the selection information (DSI1...DSI8) is formed by bit masks (BYIPC0, BYIPC1), which specify the selection of the individual equipment-side data paths in the control system individually for each connected storage device, and is entered into a control memory (CTM) shared by the checking devices.

7. Procedure according to Claim 6, characterized in that the means (BUF) for buffer storing the data in a data transfer from or to the storage device are available in each checking device (for example IPC0...IPCn).

8. Procedure according to Claim 6 or 7, characterized in that, when the equipment-related checking devices (for example IPC0, IPC1) are directly coupled to the channel system (CHSYS) via the channel-side data paths, the control information (PGIN, PGID) is stored in a memory device provided for receiving management entries for the individual storage devices.

9. Procedure according to one of Claims 2 to 7, characterized in that, in the case of a control system (CTSYS) with channel-side control devices (for example SD0...SD3) for controlling the channel-side data paths from and to the associated channels (for example CB1...CH8) of the channel system (CHSYS), the control information (PGIN, PGID) is stored in a communications memory (COM) shared by all the control devices, and in that the selection of the one channel-side data path envisaged for establishing the return connection is performed on the basis of the stored control information by specifying a free control device (for example SD0).

10. Procedure according to one of Claims 2 to 5, characterized in that, in the case of a control system (CTSYS) comprising merely channel-side control devices (for example SD0...SD3) for controlling the channel-side data paths from and to the associated channels (for example CB1...CH8) of the channel system (CHSYS), the control information (PGIN, PGID) is stored in a communications memory (COM) shared by all the control devices, in that the selection of the channel-side data path envisaged for establishing the return connection is performed on the basis of the stored control information by specifying a free control device (for example SD0), and in that the means (BUF) for buffer storing the data of a data transfer from or to the storage device are available in all the control devices (for example SD0...SD3).

## Revendications

1. Procédé d'exécution d'opérations d'entrée/sortie dans des systèmes de traitement de données, dans lequel respectivement une opération d'entrée/sortie est dirigée par une unité de traitement d'entrée/sortie (IOP) vers un système d'entrée/sortie périphérique existant (IOS), comprenant des appareils de mémoire rotatifs, en particulier des mémoires à disques (PS0...PSn) et poursuivie par une transmission de données vers un appareil de mémoire sélectionné ou à partir de ce dernier, dès qu'une liaison de retour entre l'un des appareils de mémoire reliés à un système de commande (CTSYS) et à un système à canaux (CHSYS) couplé à l'unité de traitement d'entrée/sortie (IOP) et comprenant plusieurs canaux (par exemple CH1...CH8) est établie (reconnexion dynamique) par des voies de données parallèles, prévues dans le système de commande, respectivement dans le système à canaux (CTSYS, respectivement CHSYS), du côté des appareils, respectivement du côté des canaux, caractérisé en ce que
- quelques voies sont déterminées à l'aide d'informations de commande et de sélection (PGIN, PGID et Dsl1.....DSI8) à partir des voies de données respectivement parallèles, pour l'établissement de la liaison de retour du système de commande (CTSYS), étant précisé que, parmi les voies de données du côté des canaux, seule une voie est sélectionnée dans chaque cas pour la reconnexion par le canal afférent du système à canaux (CHSYS) et occupée d'une exigence d'établissement de la liaison de retour, et
- en ce que des moyens (BUF) de mise en mémoire intermédiaire des données à reprendre par l'appareil de mémoire ou à transmettre à l'appareil de mémoire sont mis à la disposition dans le système de commande (CTSYS).

2. Procédé selon la revendication 1, caractérisé en ce que les informations de commande (PGIN, PGID) caractérisent les voies de données, du côté des canaux, qui peuvent, dans chaque cas, être sélectionnées pour l'établissement de la liaison de retour.

3. Procédé selon la revendication 2, caractérisé en ce que les informations de commande (PGIN, PGID) sont déduites d'instructions par lesquelles des groupes de voies avec diverses voies de données possibles, du côté des canaux, sont prédéterminés dans chaque cas pour l'établissement de la liaison de retour.

4. Procédé selon la revendication 1, caractérisé en ce que les informations de sélection (DSI1....DSI8) indiquent dans le système de commande (CTSYS) les voies de données du côté des appareils, pouvant être sélectionnées dans chaque cas pour l'établissement de la liaison de retour.

5. Procédé selon les revendications 3 et 4, caractérisé en ce que les informations de sélection (DSI1.....DSI8) sont déduites d'instructions pour la détermination des groupes de voies.

6. Procédé selon l'une des revendications 2 à 5, caractérisé en ce que, dans un système de commande (CTSYS) avec des dispositifs de contrôle (par exemple IPC0, IPC1), à proximité des appareils, pour la commande du système d'entrée/sortie (IOS), les informations de sélection (DsI1....DSI8) sont constituées de masques binaires (BYIPC0, BYIPC1) qui déterminent individuellement, pour chaque appareil de mémoire raccordé, la sélection des différentes voies de données, du côté des appareils, dans le système de commande, et sont inscrites dans une mémoire de commande (CTM) commune aux dispositifs de commande.

7. Procédé selon la revendication 6, caractérisé en ce que les moyens (BUF) de mise en mémoire intermédiaire des données sont disponibles dans chaque dispositif de contrôle (par exemple IPC0....IPCn) lors d'une transmission des données à partir de l'appareil de mémoire ou vers cet appareil.

8. Procédé selon la revendication 6 ou 7, caractérisé en ce que, si les dispositifs de contrôle à proximité des appareils (par exemple IPC0, IPC1) sont directement couplés au système à canaux (CHSYS) par les voies de données du côté des canaux, les informations de commande (PGIN, PGID) sont déposées dans un dispositif de mémoire prévu pour la réception d'entrées de gestion pour les différents appareils de mémoire.

9. Procédé selon l'une des revendications 2 à 7, caractérisé en ce que, dans un système de commande (CTSYS) avec dispositifs de commande du côté des canaux (par exemple SD0...SD3) pour la commande des voies de données du côté des canaux à partir des canaux afférents (par exemple CH1....CH8) du système à canaux (CHSYS) et vers ces canaux, les informations de commande (PGIN, PGID) sont mises en mémoire dans une mémoire de communication (COM) commune à tous les dispositifs de commande et en ce que la sélection de la voie de données du côté des canaux, prévue pour l'établissement de la liaison de retour, se fait par détermination d'un dispositif de commande libre (par exemple SD0), à l'aide des informations de commande mises en mémoire.

10. Procédé selon l'une des revendications 2 à 5, caractérisé en ce que, dans un système de commande (CTSYS) comprenant uniquement des dispositifs de commande (par exemple SD0....SD3) du côté des canaux, pour la commande des voies de données du côté des canaux, à partir des canaux afférents et vers ces canaux (par exemple CH1....CH8) du système à canaux (CHSYS), les informations de commande (PGIN, PGID) sont mises en mémoire dans une mémoire de communication (COM) commune à tous les dispositifs de commande, et en ce que, à l'aide des informations de commande mises en mémoire, la sélection de la voie de données du côté des canaux, prévue pour l'établissement de la liaison de retour, se fait par détermination d'un dispositif de commande libre (par exemple SD0) et en ce que les moyens (BUF) pour la mise en mémoire intermédiaire des données d'une transmission des données à partir de l'appareil de mémoire ou vers cet appareil, sont disponibles dans tous les dispositifs de commande (par exemple SD0...SD3).
